# EUROPÄISCHE PATENTSCHRIFT

(11) **EP 1 610 974 B1**
(45) Veröffentlichungstag und Bekanntmachung des Hinweises auf die Patenterteilung: **19.09.2007**
(21) Anmeldenummer: 04720585.1
(22) Anmeldetag: 15.03.2004
(51) Int. Cl.: B60N 2/22

(54) **SITZANORDNUNG FÜR EINEN KRAFTFAHRZEUGSITZ**
SEAT ARRANGEMENT FOR A MOTOR VEHICLE SEAT
ENSEMBLE DE SIEGE POUR UN SIEGE DE VEHICULE AUTOMOBILE

(30) Priorität: 26.03.2003 DE 10314477
(43) Veröffentlichungstag der Anmeldung: 04.01.2006
(73) Patentinhaber: Brose Fahrzeugteile GmbH & Co. KG, Coburg, 96450 Coburg (DE)
(72) Erfinder: FISCHER, Matthias, 96317 Kronach (DE); HOFMANN, Jochen, 96257 Marktgraitz (DE)
(74) Vertreter: Baumgärtel, Gunnar
(86) Internationale Anmeldenummer: PCT/DE2004/000576
(87) Internationale Veröffentlichungsnummer: WO 2004/085196

(56) Entgegenhaltungen:
- WO-A-01/51306
- DE-A- 19 720 944
- GB-A- 2 001 730
- US-A- 4 131 316
- US-A- 4 332 418

## Beschreibung

Die Erfindung betrifft eine Sitzanordnung für einen Kraftfahrzeugsitz mit einem Sitzuntergestell, das eine Sitzfläche für einen Kraftfahrzeuginsassen definiert, sowie einer schwenkbar an einer Gestellbaugruppe des Sitzes angelenkte Rückenlehne, die um eine Schwenkachse auf die Sitzfläche klappbar ist.

Dabei sind ferner Verriegelungsmittel zum Verriegeln der Rückenlehne in mindestens einer Gebrauchsposition, in der sie zum Abstützen des Rückens eines Insassen dient, und in der vorgeklappten Position vorgesehen, sowie ein Entriegelungsmechanismus zum Entriegeln der Verriegelungseinrichtung, so dass die Rückenlehne um die Schwenkachse geklappt werden kann, und zwar entweder aus der Gebrauchsposition heraus in die auf die Sitzfläche vorgeklappte Position oder umgekehrt aus der vorgeklappten Position heraus zurück in eine Gebrauchsposition. Der Entriegelungsmechanismus kann beispielsweise durch einen an der Rückenlehne schwenkbar gelagerten Entriegelungsgriff gebildet werden, durch dessen Betätigung sich die Verriegelungseinrichtung der Rückenlehne entriegeln lässt, indem der Entriegelungsmechanismus über einen Koppelmechanismus auf die Verriegelungseinrichtung einwirkt.

Eine derartige Sitzanordnung kann sowohl zur Bildung eines Vordersitzes als auch zur Bildung eines Rücksitzes eines Kraftfahrzeugs dienen. Sie ermöglicht das Vorklappen der Rückenlehne des entsprechenden Kraftfahrzeugsitzes auf die Sitzfläche, um zusätzlichen Stauraum zu schaffen. Die entsprechende Sitzfläche wird in der Regel durch ein Sitzpolster gebildet, das auf dem Sitzuntergestell angeordnet ist. Somit definiert das Sitzuntergestell die Sitzflächen insoweit, als es die Lage des Sitzpolsters bestimmt, welches wiederum die Sitzfläche aufweist.

Bei einer Sitzanordnung der eingangs genannten Art, besteht das Problem, dass die Rückenlehne beim Vorklappen, insbesondere mit einer an der Rückenlehne vorgesehenen Kopfstütze, mit der Windschutzscheibe (im Fall eines Vordersitzes) oder mit der Rückenlehne eines anderen Sitzes (im Fall eines Rücksitzes) kollidieren kann. Daher ist es erforderlich, vor dem Vorklappen der Rückenlehne auf die Sitzfläche die Kopfstütze von der Rückenlehne abzunehmen und an einem separaten Ort abzulegen. Dies beeinträchtigt in erheblichem Maße den Bedienkomfort einer Sitzanordnung mit vorklappbarer Rückenlehne.

Der Erfindung liegt das Problem zugrunde, eine Sitzanordnung der eingangs genannten Art hinsichtlich ihres Bedienkomforts zu verbessern.

Dieses Problem wird erfindungsgemäß durch die Schaffung einer Sitzanordnung mit den Merkmalen des Patentanspruchs 1 gelöst.

Danach ist bei einer Sitzanordnung der eingangs genannten Art weiter vorgesehen, dass die Schwenkachse der Rückenlehne beim Vorklappen der Rückenlehne auf der Sitzfläche entlang einer vorgegebenen Bahn verlagert (insbesondere verschoben) wird, so dass sie ihre räumliche Lage ändert, wobei mindestens ein Koppelelement des Koppelmechanismus derart mit der Schwenkachse verbunden ist, dass es beim Umklappen der Rückenlehne gemeinsam mit der Schwenkachse verlagert wird.

Die Bewegungsbahn der Schwenkachse kann derart gewählt werden, dass eine Kollision der Rückenlehne des entsprechenden Fahrzeugsitzes mit anderen Fahrzeugkomponenten vermieden wird, insbesondere indem die Bahn derart verläuft, dass die Oberkante der Rückenlehne (und damit auch eine an der Oberkante der Rückenlehne angeordnete Kopfstütze) beim Vorklappen der Rückenlehne entlang einer Kurve bewegt werden, die eine Kollision mit anderen Fahrzeugkomponenten ausschließt.

Die Schwenkachse der Rückenlehne wird hierbei durch eine körperliche Baugruppe gebildet, d.h., es handelt sich nicht um eine bloß virtuelle Schwenkachse, sondern vielmehr um eine Lagerachse, über die die Rückenlehne an einer Gestellbaugruppe des Kraftfahrzeugsitzes schwenkbar gelagert ist.

Aufgrund der Verlagerung der Schwenkachse der Rückenlehne beim Vorklappen aus einer Gebrauchsposition heraus auf die Sitzfläche bzw. bei einem anschließenden Zurückklappen aus der vorgeklappten Position zurück in eine Gebrauchsposition und damit einer Verlagerung der Rückenlehne selbst, ist die Koppelung des Entriegelungsmechanismus an die am Sitzuntergestell angeordneten Bestandteile der Verriegelungseinrichtung der Rückenlehne, mit der sich die Rückenlehne relativ zu dem Sitzuntergestell in bestimmten Schwenkpositionen arretieren lässt, erschwert. So besteht bei der Verwendung eines Gestänges als Koppelmechanismus zur Kopplung des Entriegelungsmechanismus mit der Verriegelungseinrichtung das Problem, dass das Gestänge nicht hinreichend flexibel ist, um die Relativbewegung zwischen der beweglichen (und zu verriegelnden) Schwenkachse der Rückenlehne und dem Sitzuntergestell auszugleichen. Wird demgegenüber ein Bowdenzug mit einem flexiblen Zugmittel als Koppelmechanismus verwendet, so besteht das Problem, dass eine hinreichend große Reserveschlaufe vorgesehen sein muss, um die genannte Relativbewegung auszugleichen, was den erforderlichen Bauraum des Entriegelungsmechanismus vergrößert.

Dieses Problem wird dadurch überwunden, dass mindestens ein Koppelelement des Koppelmechanismus mit der beim Vorklappen der Rückenlehne verlagerbaren Schwenkachse verbunden ist, so dass es sich beim Klappen der Rückenlehne gemeinsam mit der Schwenkachse bewegt, wodurch der Koppelmechanismus die Relativbewegung zwischen Schwenkachse und Sitzuntergestell in einfacher Weise ausgleichen kann, wie nachfolgend näher erläutert werden wird.

Die Verriegelbarkeit der Rückenlehne bezieht sich dabei einerseits auf den Gebrauchsbereich der Rückenlehne, der eine oder mehrere Schwenkpositionen umfasst, die jeweils einer Gebrauchsposition der Rückenlehne entsprechen, in der die Rückenlehne jeweils verriegelbar ist, um den Rücken eines Sitzbenutzers abstützen zu können, sowie auf die vorgeklappte Position der Rückenlehne, in der diese wiederum verriegelbar ist. In dem dazwischen liegenden Schwenkbereich, den die Rückenlehne beim Vorklappen aus dem Gebrauchsbereich heraus in Richtung auf die Sitzfläche überstreicht, ist demgegenüber keine Verriegelbarkeit der Rückenlehne erforderlich. Dieser Zwischenbereich entspricht denjenigen Schwenkpositionen der Rückenlehne, bei denen diese, verglichen mit einer Gebrauchsposition, nach vorne in Richtung auf die Sitzfläche geneigt, jedoch noch nicht auf diese vorgeklappt ist.

Das beim Vorklappen der Rückenlehne gemeinsam mit der Schwenkachse der Rückenlehne verlagerbare Koppelelement des Koppelmechanismus ist als ein separates Element des Koppelmechanismus ausgebildet, das von der (vom Entriegelungsmechanismus her gesehen) vorgelagerten Baugruppe des Koppelmechanismus entkoppelbar ist, so dass das gemeinsam mit der Schwenkachse der Rückenlehne verlagerbare Koppelelement nicht mit dem Entriegelungsmechanismus in Wirkverbindung bringbar ist. Diese Entkopplung zwischen der vorgelagerten Baugruppe des Koppelmechanismus sowie dem nachgeordneten Koppelelement erfolgt insbesondere in dem Schwenkbereich, der zwischen dem Gebrauchsbereich und der auf die Sitzfläche der Rückenlehne vorgeklappten Lehnenposition liegt. In jenem Schwenkbereich ist keine Entriegelung der Verriegelungseinrichtung erforderlich, weil sich die Rückenlehne in diesem Schwenkbereich, der lediglich als ein Übergangsbereich vom Gebrauchsbereich zur vorgeklappten Position dient, ohnehin nicht verriegelt wird. In der mindestens einen Gebrauchsposition der Rückenlehne sowie in der vorgeklappten Position der Rückenlehne, in denen diese jeweils verriegelbar ist, muss demgegenüber der Entriegelungsmechanismus über den Koppelmechanismus auf die Verriegelungseinrichtung einwirken können, so dass diese durch Betätigung des Entriegelungsmechanismus entriegelbar ist. D. h., in den besagten Positionen der Rückenlehne muss ein Einwirken der vorgelagerten Baugruppe des Koppelmechanismus auf das nachgeordnete, zusammen mit der Schwenkachse der Rückenlehne bewegliche Koppelelement möglich sein, um über den Koppelmechanismus auf die Verriegelungseinrichtung einwirken zu können.

Das wahlweise Koppeln und Entkoppeln des Koppelelementes mit der diesem vorgelagerten Baugruppe des Koppelmechanismus lässt sich dadurch erreichen, dass das Koppelelement als ein separates Bauelement des Koppelmechanismus mit der vorgelagerten Baugruppe des Koppelmechanismus außer Eingriff steht, wenn der Entriegelungsmechanismus nicht zur Entriegelung der Verriegelungseinrichtung betätigt ist. Bei Betätigung des Entriegelungsmechanismus zur Entriegelung der Verriegelungseinrichtung gerät die vorgelagerte Baugruppe des Koppelmechanismus dann in Eingriff mit dem nachgeordneten Koppelelement, wenn sich die Rückenlehne in einer Gebrauchsposition oder in der vorgeklappten Position befindet, in der sie jeweils verriegelbar ist. Dies entspricht einer Kopplung zwischen dem Koppelelement und der vorgelagerten Baugruppe des Koppelmechanismus in den entsprechenden Lehnenpositionen, da ja jeweils eine Einwirkung der vorgelagerten Baugruppe des Koppelmechanismus auf das Koppelelement möglich ist. Im entkoppelten Zustand kann die vorgelagerte Baugruppe des Koppelmechanismus demgegenüber nicht mit dem nachgeordneten Koppelelement in Eingriff gebracht werden.

Zur Herstellung des Eingriffs weist das Koppelelement mindestens einen Mitnehmer auf, über den die vorgelagerte Baugruppe des Koppelmechanismus mit dem nachgeordneten Koppelelement in Eingriff bringbar ist. Insbesondere sind zwei derartige Mitnehmer vorgesehen, von denen der eine bei Betätigung des Entriegelungsmechanismus durch die vorgelagerte Baugruppe des Kopplungsmechanismus ergreifbar ist, wenn sich die Rückenlehne in einer Gebrauchsposition befindet, und der andere durch die vorgelagerte Baugruppe des Koppelmechanismus ergreifbar ist, wenn die Rückenlehne auf die Sitzfläche vorgeklappt ist. Falls sich die Rückenlehne in einer Mehrzahl unterschiedlicher Gebrauchspositionen arretieren lässt, so können diesem Gebrauchsbereich auch mehrere Mitnehmer des Koppelelementes zugeordnet sein.

Die dem Koppelelement vorgelagerte Baugruppe des Koppelmechanismus ist zusammen mit dem Entriegelungsmechanismus an der Rückenlehne angeordnet und wird beim Vorklappen der Rückenlehne gemeinsam mit dieser bewegt. Die mindestens zwei Mitnehmer des Koppelelementes sind dementsprechend derart auf diesem angeordnet, dass in der mindestens einen Gebrauchsposition sowie der vorgeklappten Position der Rückenlehne die dem Koppelelement vorgelagerte Baugruppe des Koppelmechanismus jeweils über einen dieser Mitnehmer auf das Koppelelement einwirken kann.

Die dem Koppelelement vorgelagerte Baugruppe des Koppelmechanismus umfasst ein schwenkbar gelagertes Element, über das sie bei Betätigung des Entriegelungsmechanismus auf das nachgeordnete Koppelelement einwirken kann. Das schwenkbar gelagerte Element des Koppelmechanismus ist beispielsweise über ein Zugmittel, insbesondere in Form einer Zugstange oder eines flexiblen Zugmittels, mit dem Entriegelungsmechanismus gekoppelt.

Der Entriegelungsmechanismus ist wiederum mittels eines elastischen Elementes in Richtung auf einen Zustand vorgespannt, in dem er nicht zur Entriegelung der Verriegelungseinrichtung auf den Koppelmechanismus einwirkt, so dass sich das Koppelelement außer Eingriff mit der vorgelagerten Baugruppe des Koppelmechanismus befindet. Dieser Eingriff wird - in den verriegelbaren Positionen der Rückenlehne - durch eine Betätigung des Entriegelungsmechanismus, insbesondere eines hierfür vorgesehenen Entriegelungsgriffes, herbeigeführt.

Das Koppelelement ist bevorzugt schwenkbar auf der verlagerbaren Schwenkachse der Rückenlehne gelagert, so dass es sich zur Entriegelung der Verriegelungseinrichtung der Rückenlehne verschwenken lässt.

Zur Führung der Schwenkachse beim Vorklappen der Rückenlehne entlang einer vorgegebenen Bahn dient eine Führungseinrichtung, z. B. in Form einer Führungskulisse, mit der die Schwenkachse derart zwangsgeführt wird, dass die gewünschte Bewegung der Oberkante der Rückenlehne erreicht wird.

Alternativ oder ergänzend zu einer Führungseinrichtung, die sich entlang der vorgegebenen Bahn für die Bewegung der Schwenkachse erstreckt, kann zur Führung der Schwenkachse auch ein längserstrecktes Führungselement vorgesehen sein, über das die Schwenkachse mit der zugehörigen Gestellbaugruppe verbunden ist und das beim Vorklappen der Rückenlehne derart bewegt wird, dass sich die Schwenkachse auf der vorgegebenen Bahnkurve bewegt. Als derartiges Führungselement eignet sich insbesondere ein Führungshebel, der schwenkbar an der Gestellbaugruppe angelenkt ist.

Um eine definierte Bewegung der Schwenkachse beim Vorklappen der Rückenlehne zu sicherzustellen, kann die Rückenlehne zusätzlich in einem von ihrer Schwenkachse (Lagerachse) beabstandeten Abschnitt mit der Gestellbaugruppe verbunden sein, z.B. über ein Koppelelement in Form eines Koppelhebels, der sich von der Rückenlehne zu der Gestellbaugruppe erstreckt. Alternativ kann die zusätzliche Kopplung von Rückenlehne und Gestellbaugruppe über eine Führungseinrichtung in Form einer Führungskulisse erfolgen, in der ein von der Schwenkachse beabstandeter Abschnitt der Rückenlehne beim Vorklappen geführt wird.

Gemäß einer Variante der Erfindung wird die Schwenkachse beim Vorklappen der Rückenlehne auf einer geschlossenen Bahn bewegt, so dass sich die Schwenkachse nach dem vollständigen Vorklappen der Rückenlehne wieder an derselben Stelle befindet wie vor Beginn der Klappbewegung. Dies kann auch dadurch erreicht werden, dass die Schwenkachse beim Vorklappen der Rückenlehne von einem Ende zum anderen Ende einer offenen Bahnkurve und wieder zurück zum einen Ende dieser Bahnkurve bewegt wird.

Eine derartige Hin- und Herbewegung der Schwenkachse der Rückenlehne in einer zugeordneten Führungskulisse kann insbesondere dadurch erreicht werden, dass die Schwenkachse über ein Gelenkhebelpaar mit dem Sitzuntergestell verbunden ist.

Eine Verbindung des Koppelmechanismus mit der Verriegelungseinrichtung der Rückenlehne kann insbesondere in der Weise erfolgen, dass der Koppelmechanismus, vorzugsweise dessen auf der Schwenkachse gelagertes Koppelelement, gelenkig über einen in eine Längsführung geführten Gelenkbolzen mit einem Element der Verriegelungseinrichtung; insbesondere einem Verriegelungshebel, in Wirkverbindung steht.

Die Verriegelungseinrichtung ist wiederum mittels eines elastischen Elementes in Richtung auf ihren verriegelten Zustand vorgespannt, so dass sie die Rückenlehne in den entsprechenden Endpositionen (Gebrauchspositionen oder auf eine Sitzfläche vorgeklappte Position) automatisch unter der Wirkung dieser Feder verriegelt, wenn nicht der Entriegelungsmechanismus betätigt ist.

Der schwenkbar gelagerte Verriegelungshebel der Verriegelungseinrichtung beaufschlagt im verriegelten Zustand der Verriegelungseinrichtung die Schwenkachse der Rückenlehne derart, dass diese nicht verlagert werden kann, so dass die Rückenlehne insgesamt in ihrer aktuellen Schwenkposition gegen ein Umklappen verriegelt ist; denn eine Klappbewegung der Rückenlehne ist ja erfindungsgemäß mit einer Verlagerung der Schwenkachse unmittelbar verbunden.

Zum Vorklappen der Rückenlehne ist der Verriegelungshebel durch Betätigung des Entriegelungsmechanismus verschwenkbar, so dass er die Schwenkachse der Rückenlehne in der Führungskulisse freigibt. Für eine definierte Schwenkbewegung des Verriegelungshebels kann dieser beim Verschwenken mittels einer Führungskulisse geführt werden.

Gemäß einer weiteren Ausführungsform der Erfindung ist zusätzlich eine Verstelleinrichtung vorgesehen, mittels der die Neigung der hochgeklappten Rückenlehne zwischen verschiedenen Gebrauchspositionen einstellbar ist. Diese Verstelleinrichtung dient also nicht zum Vorklappen der Rückenlehne auf die Sitzfläche, sondern vielmehr dazu, den Neigungswinkel der hochgeklappten Rückenlehne etwas verändern zu können, um ihn an die individuellen Bedürfnisse eines Fahrzeuginsassen anpassen zu können. Dabei verbleibt die Rückenlehne jedoch stets in einer Position, in der sie zum Abstützen des Rückens einer auf dem entsprechenden Fahrzeugsitz befindlichen Person geeignet ist.

Diese Einstellung der Lehnenneigung kann je nach Auslegung der hierfür vorgesehenen Verstelleinrichtung durch manuelle Einwirkung unmittelbar auf die Rückenlehne selbst oder mittels eines mit der Rückenlehne gekoppelten, ggf. elektrischen, Antriebs erfolgen. Zur Fixierung einer zuvor eingestellten Neigung der Rückenlehne in einer Gebrauchsposition können Verriegelungsmittel vorgesehen sein, die einerseits durch eine selbsthemmende Auslegung der zur Einstellung der Lehnenneigung vorgesehenen Verstelleinrichtung oder eine hiermit zusammenwirkende Bremse gebildet werden können oder andererseits durch hiervon separate Verriegelungsteile.

Bei der Verstellung der Gebrauchsposition der Rückenlehne, d. h. bei einem begrenzten Verschwenken der Rückenlehne von einer Gebrauchsposition in eine andere Gebrauchsposition mittels der hierfür vorgesehenen Verstelleinrichtung, wird der Entriegelungsmechanismus der Rückenlehne nicht betätigt; bei dieser begrenzten Verstellung der Rückenlehne erfolgt also insbesondere keine Verlagerung von deren Schwenkachse, da diese ja mittels der hierfür vorgesehenen (und nur durch Betätigung des Entriegelungsmechanismus entriegelbaren) Verriegelungseinrichtung gegen eine Verlagerung gesichert ist.

Weitere Merkmale und Vorteile der Erfindung werden bei der nachfolgenden Beschreibung eines Ausführungsbeispiels anhand der Figuren deutlich werden.

Es zeigen:
- Fig. 1: eine schematische Darstellung eines Kraftfahrzeugsitzes mit einer Rückenlehne, die auf die Sitzfläche des Sitzuntergestells des Kraftfahrzeugsitzes vorklappbar ist;
- Fig. 2: einen Kraftfahrzeugsitz gemäß Figur 1 mit einer Verriegelungseinrichtung zum Verriegeln der Rückenlehne in mindestens einer aufrechten Gebrauchsposition sowie in der auf die Sitzfläche vorgeklappten Position und mit einem Entriegelungsmechanismus zur Entriegelung der Rückenlehne, der über einen Koppelmechanismus mit der Verriegelungseinrichtung gekoppelt ist.
- Fig. 3a und 3b: eine Vorderansicht und eine Rückansicht eines Details aus Figur 2 im Bereich der Verriegelungseinrichtung und des Koppelmechanismus in einem Zustand, in dem die Rückenlehne in einer aufgerechten Gebrauchsposition verriegelt ist;
- Fig. 4a und 4b: eine Darstellung gemäß den Figuren 3a und 3b nach Entriegelung der Verriegelungseinrichtung der Rückenlehne;
- Fig. 5a und 5b: eine Darstellung gemäß den Figuren 3a und 3b in einem Zustand, in dem die Rückenlehne auf die Sitzfläche vorgeklappt und in dieser Position verriegelt ist;
- Fig. 6a und 6b: eine Darstellung gemäß den Figuren 3a und 3b in einem Zustand, in dem die Rückenlehne in Richtung auf die Sitzfläche vorgeklappt und die zugeordnete Verriegelungseinrichtung entriegelt ist.

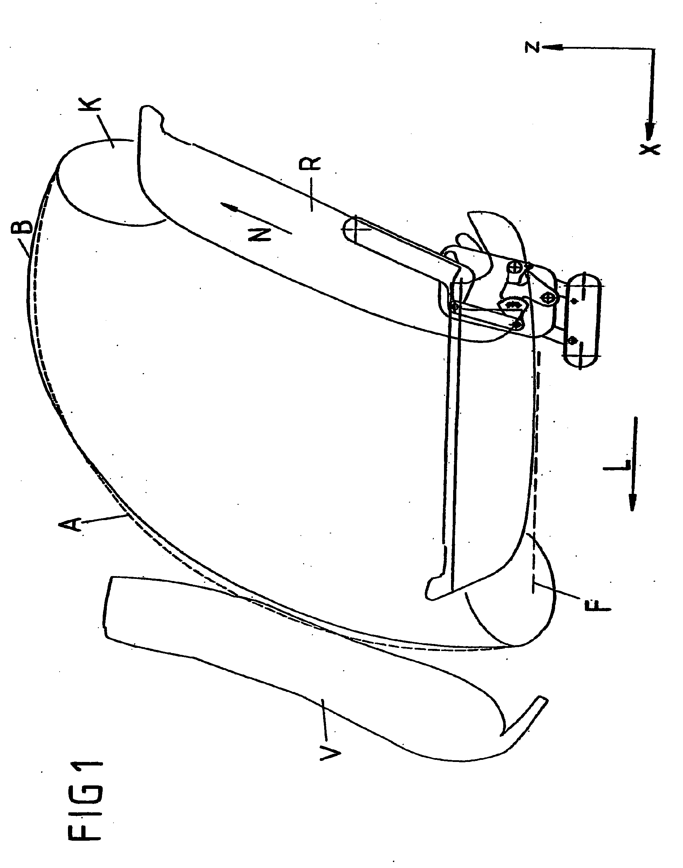

In Figur 1 ist eine Rückenlehne R eine Kraftfahrzeugsitzes mit Kopfstütze K einerseits in einer aufrechten Gebrauchsposition und andererseits in einer auf eine Sitzfläche F vorgeklappten, im wesentlichen horizontalen Position dargestellt. Die Sitzfläche F wird durch ein auf einem Sitzuntergestell angeordnetes Sitzpolster gebildet.

Die Rückenlehne R ist einerseits in ihrer Neigung N zwischen verschiedenen Gebrauchspositionen verstellbar. Diese Gebrauchspositionen zeichnen sich jeweils dadurch aus, dass die Rückenlehne in der jeweiligen Gebrauchsposition zum Abstützen des Rückens einer auf dem entsprechenden Kraftfahrzeugsitz befindlichen Person geeignet ist. Bezogen auf den in ein Kraftfahrzeug eingebauten Zustand eines Kraftfahrzeugsitzes erstreckt sich der Gebrauchsbereich üblicherweise von der senkrechten Ausrichtung der Rückenlehne R (entlang der vertikalen Fahrzeugachse z) bis hin zu einer stark nach hinten geneigten Rückenlehne R.

Darüber hinaus kann die Rückenlehne R in Richtung auf die durch das auf dem Sitzuntergestell angeordnete Sitzpolster gebildete Sitzfläche F vorgeklappt werden, um in dem Fahrzeug zusätzlichen Transportraum zu Verfügung zu stellen. Dies ist insbesondere von Bedeutung bei einem Rücksitz, wie er in Figur 1 dargestellt ist.

Beim Vorklappen der Rückenlehne R eines Rücksitzes besteht das Problem, dass die Oberseite der Rückenlehne bzw. die hierauf angeordnete Kopfstütze K mit der Rückenlehne eines Vordersitzes V kollidieren können. Dies wird deutlich anhand der in Figur 1 gestrichelt dargestellten Kurve A, die die Bewegung der Oberseite der Kopfstütze K beim Verschwenken der Rückenlehne R um eine definierte Achse im unteren Bereich der Rückenlehne illustriert. Es ist erkennbar, dass diese Kurve A die Rückenlehne des Vordersitzes V schneidet. Dies bedeutet, dass die Rückenlehne R des hinteren Sitzes sich nur dann auf die Sitzfläche F vorklappen lässt, wenn zuvor die Kopfstütze K entfernt worden ist. Dies mindert den Bedienkomfort der Einrichtung zum Vorklappen der Rückenlehne R.

Erfindungsgemäß ist nun die Einrichtung zum Vorklappen der Rückenlehne R auf die Sitzfläche F derart ausgestalten, dass sich die Schwenkachse, um die die Rückenlehne R beim Vorklappen auf die Sitzfläche F verschwenkt wird, während des Vorklappens der Rückenlehne derart bewegt, dass eine Kollision der Oberkante der Kopfstütze K mit dem Vordersitz V vermieden wird.

Eine entsprechende Bahnkurve B der Oberkante der Kopfstütze K ist in Figur 1 mit einer durchgezogenen Linie dargestellt. Es ist erkennbar, dass die Schwenkachse sich während des Vorklappens der Rückenlehne zunächst einerseits nach oben (entlang der vertikalen Fahrzeugachse z) und andererseits nach hinten (entgegen der Fahrzeuglängsachse x) bewegt. Hierdurch ist die korrigierte Bahnkurve B gegenüber der ursprünglichen Bahnkurve A (die sich beim Umklappen der Rückenlehne um eine nicht bewegte Schwenkachse ergibt) etwas nach oben (entlang der vertikalen Fahrzeugachse z) sowie etwas nach hinten (entgegen der Fahrzeuglängsrichtung x) verschoben. Dies verhindert eine Kollision der Oberkante der Kopfstütze K mit der Rückenlehne des Vordersitzes V.

Darüber hinaus kann die Rückenlehne R des in Figur 1 dargestellten Fahrzeugsitzes in Sitzlängsrichtung L gegenüber dem Sitzuntergestell U und der Sitzfläche F verschiebbar sein. Die Sitzlängsrichtung L ist dabei definiert als diejenige Richtung, entlang der sich das Sitzuntergestell sowie das hierauf angeordnete, die Sitzfläche F bildende Sitzpolster erstrecken. Bei einem in ein Kraftfahrzeug eingebauten Fahrzeugsitz entspricht die Sitzlängsrichtung L der Fahrzeuglängsachse x. D.h., die Sitzlängsrichtung L entspricht derjenigen Richtung entlang der ein Fahrzeugsitz üblicherweise mittels einer Sitzlängsverstellung verschiebbar ist.

Die Verschiebung der Rückenlehne R in Sitzlängsrichtung L (bzw. Fahrzeugslängsrichtung x) bezüglich des Sitzuntergestells und der Sitzfläche F kann unterschiedlichen Zwecken dienen: Zum einen kann hierdurch die Sitzkissentiefe verstellt werden, um diese an die individuellen Bedürfnisse eines Fahrzeuginsassen anzupassen. Zum anderen kann durch Verschieben der Rückenlehne R in Sitzlängsrichtung L nach vorne hinter der Rückenlehne R zusätzlicher Stauraum gewonnen werden. Umgekehrt kann durch Verschieben der Rückenlehne R nach hinten zusätzlich dazu beigetragen werden, dass die Rückenlehne R beim Vorklappen nicht mit dem Vordersitz V kollidiert.

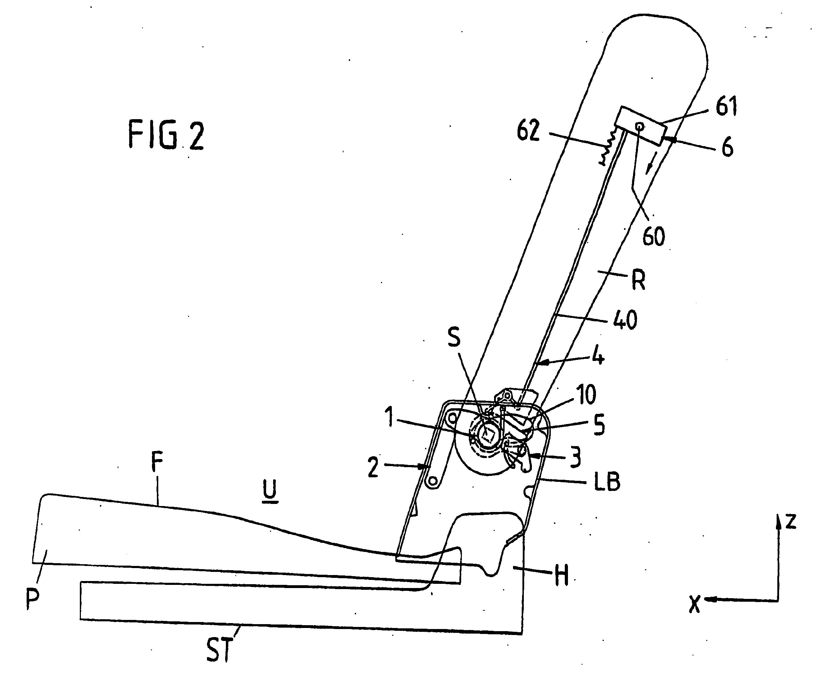

Figur 2 zeigt einen weiteren Kraftfahrzeugsitz, der in Figur 1 dargestellten Art, d. h. einen Kraftfahrzeugsitz, dessen Rückenlehne R aus einer aufrechten Gebrauchsposition heraus in Richtung auf die Sitzfläche F eines Sitzuntergestells U vorklappbar ist. In der in Figur 2 gezeigten Gebrauchsposition erstreckt sich die Rückenlehne R im Wesentlichen senkrecht zu der Sitzfläche F, d. h.- bezogen auf den in ein Kraftfahrzeug eingebauten Zustand des Sitzes - in Richtung der vertikalen Fahrzeugachse z.

Das Sitzuntergestell U wird gebildet durch zwei an den beiden Längsseiten des Sitzuntergestells U angeordnete Seitenteile ST, die jeweils (gegebenenfalls über eine Sitzlängsführung) mit dem Fahrzeugboden eines Kraftfahrzeugs zu verbinden sind und einen Halteabschnitt H aufweisen, an dem einerseits ein Polsterträger P und andererseits über einen Lehnenbeschlag LB die Rückenlehne R schwenkbar angelenkt sind. Der Polsterträger P trägt ein Sitzpolster, welches die Sitzfläche F für einen Sitzbenutzer definiert und die Rückenlehne R steht im hinteren Bereich des Sitzpolsters P von dem am Halteabschnitt H befestigten Lehnenbeschlag LB ab, an dem sie schwenkbar angelenkt ist.

Die Schwenkachse S, um die die Rückenlehne R beim Vorklappen auf die Sitzfläche F des Sitzuntergestells U verschwenkbar ist, wird gebildet durch eine Lagerwelle 1 der Rückenlehne, die in einer Führungskulisse 10 des Lehnenbeschlags LB geführt ist, so dass die Schwenkachse S der Rückenlehne R beim Vorklappen durch Bewegung der Lagerwelle 1 in der Führungskulisse 10 verlagert werden kann und die Oberkante der Rückenlehne R eine definierte, anhand Figur 1 beschriebene Bahnkurve überstreicht. Die kombinierte Schwenkbewegung und Verlagerung der Lagerwelle 1 in der Führungskulisse 10 beim Vorklappen der Rückenlehne R auf die Sitzfläche F des Sitzuntergestells U wird gesteuert durch eine Hebelanordnung 2, das einerseits an der Lagerwelle 1 und andererseits am Lehnenbeschlag LB angelenkt ist.

In dem in Figur 2 gezeigten Zustand ist die Rückenlehne R jedoch in ihrer aufrechten Gebrauchsposition verriegelt, da ein Verriegelungshebel 3 auf die Lagerwelle 1 derart einwirkt, dass diese keine kombinierte Schwenk- und Verschiebebewegung in der Führungskulisse 10 ausführen kann. Vor einem Vorklappen der Rückenlehne R aus der in Figur 2 gezeigten Gebrauchsposition auf die Sitzfläche F des Sitzuntergestells U muss daher zunächst der Verriegelungshebel 3 entriegelt werden. Hierzu ist ein Entriegelungsmechanismus 6 vorgesehen, der über einen Koppelmechanismus 4, 5 mit dem Verriegelungshebel 3 gekoppelt ist und durch den der Verriegelungshebel 3 derart verschwenkbar ist, dass er außer Eingriff mit der Lagerwelle 1 gerät und diese für eine kombinierte Schwenk- und Verschiebebewegung beim Vorklappen der Rückenlehne R freigibt.

Der Entriegelungsmechanismus 6 wird gebildet durch einen im oberen Bereich der Rückenlehne R angeordneten, um eine Achse 60 verschwenkbaren Entriegelungshebel 61, der mittels eines elastischen Elementes 62 in Richtung auf eine Position vorgespannt ist, in der er nicht zur Entriegelung auf den Verriegelungshebel 3 einwirkt. Zur Entriegelung des Verriegelungshebels 3 ist eine Betätigung des Entriegelungsgriffes 61 entgegen der Wirkung des elastischen Elementes 62 erforderlich, wobei jener eine Zugkraft auf eine Zugstange 40 des Koppelmechanismus 4, 5 ausübt, welche die bei Betätigung des Entriegelungshebels 6 erzeugte Betätigungskraft in den Verriegelungshebel einleitet und diesen derart verschwenkt, dass die Lagerwelle 1 der Rückenlehne 3 freigegeben wird.

In Figur 1 nicht dargestellt ist eine gegebenenfalls zusätzlich vorgesehene Verstelleinrichtung der Rückenlehne R, mit der diese in unterschiedliche Gebrauchspositionen, d. h. Positionen mit unterschiedlicher Neigung der Rückenlehne R eingestellt werden kann, in denen die Rückenlehne R jeweils zum Abstützen des Rückens eines Sitzbenutzers dient, also nicht substanziell in Richtung auf die Sitzfläche F vorgeklappt ist. Eine entsprechende Schwenkbewegung der Rückenlehne R erfolgt unabhängig von einer Verlagerung der Schwenkachse S und erfordert daher keine Betätigung des Entriegelungsmechanismus 6. Hinsichtlich der Möglichkeit einer Einstellung der Neigung der Rückenlehne R unabhängig von einem Vorklappen der Rückenlehne R wird auf die Deutsche Patentanmeldung 102 46 473 verwiesen.

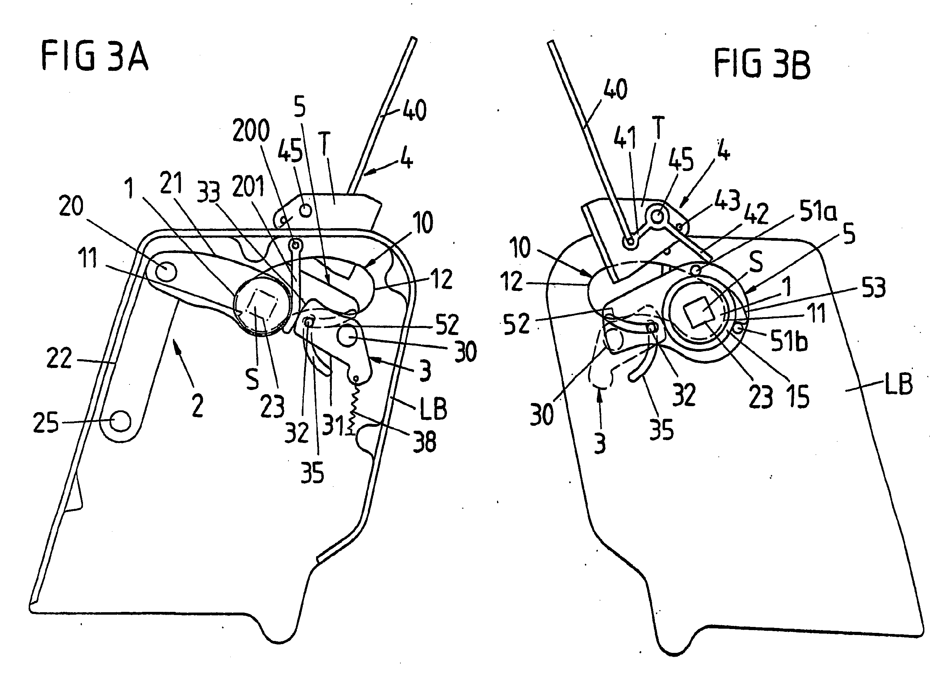

Der Mechanismus zur Verlagerung der Schwenkachse S der Rückenlehne R beim Vorklappen der Rückenlehne R sowie zur Verriegelung und Entriegelung der die Schwenkachse S bildenden Lagerwelle 1 wird nachfolgend anhand der Figuren 3a und 3b näher beschrieben werden, die ein Detail der in Figur 2 dargestellten Sitzanordnung zeigt, und zwar die am Lehnenbeschlag LB angeordneten Baugruppen.

Gemäß den Figuren 3a und 3b, die einer Vorderansicht und eine Rückansicht des Lehnenbeschlages LB zusammen mit den daran angeordneten weiteren Baugruppen 1, 2, 3, 4, 5 zeigen, ist die Lagerwelle 1 der Rückenlehne R in einer am Lehnenbeschlag LB ausgebildeten Führungskulisse 10 geführt, die sich im wesentlichen in Sitzlängsrichtung von einem einen ersten Anschlag für die Lagerwelle 1 bildenden vorderen Ende 11 zu einem einen zweiten Anschlag bildenden hinteren Ende 12 erstreckt.

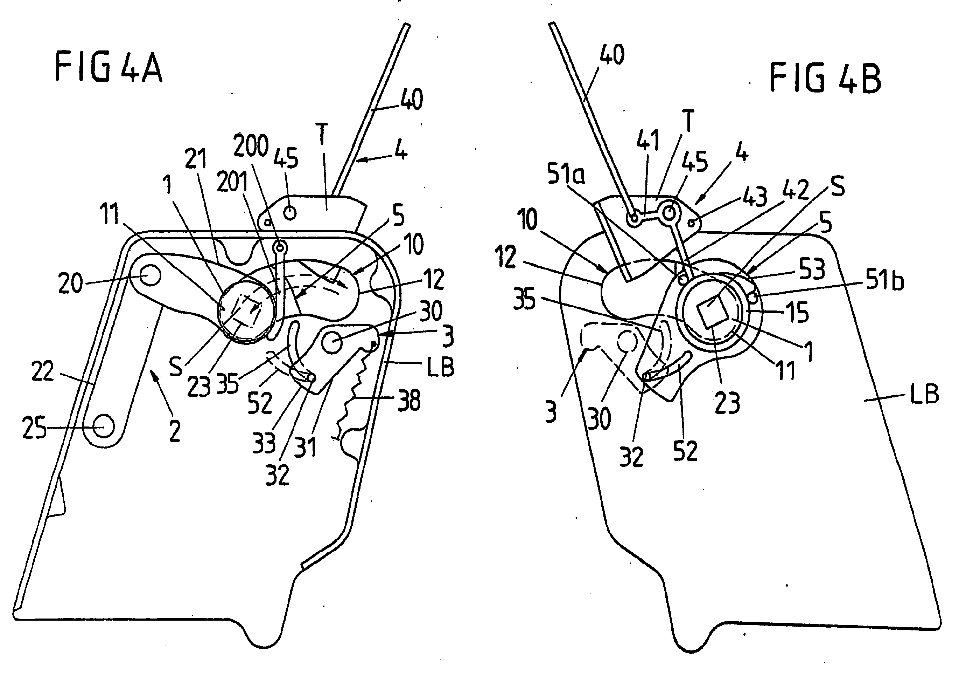

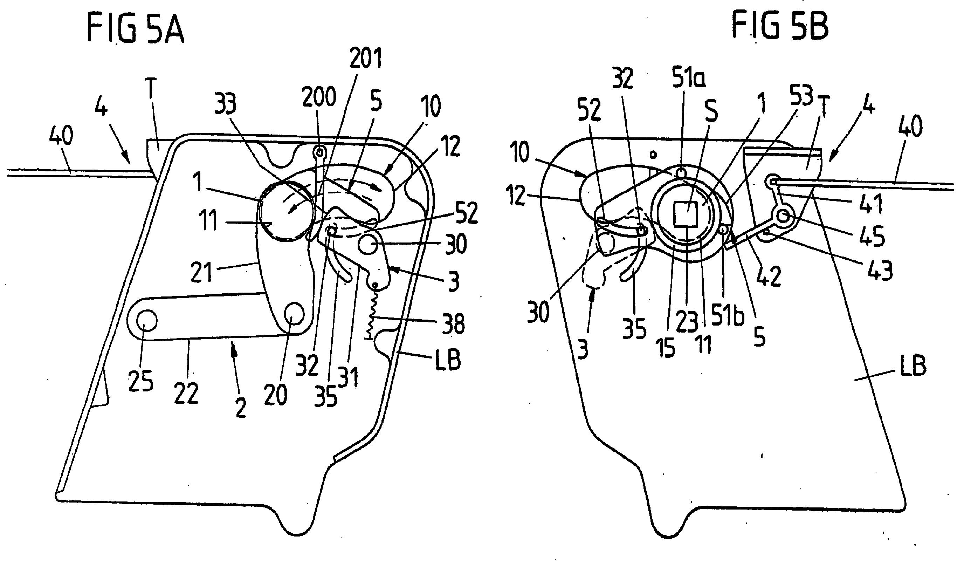

Der drehfest mit der Rückenlehne R (vergleiche Figur 2) verbundene Lagerzapfen 1 ist über eine Hebelanordnung in Form eines Gelenkhebelpaares mit dem Lehnenbeschlag LB gelenkverbunden. Das Gelenkhebelpaar 2 umfasst einen ersten Hebel 21, der über einen Vierkant 23 drehfest mit der Lagerwelle 1 verbunden ist, und einen über einen Gelenkbolzen 20 mit dem ersten Hebel 21 gelenkverbundenen zweiten Hebel 22, der über ein weiteres Gelenk 25 am Lehnenbeschlag LB angeordnet ist. Dieses Gelenkhebelpaar 2 löst bei einem Vorklappen der Rückenlehne R (vergleiche Figuren 1 und 2) und einer hiermit einhergehenden Schwenkbewegung der Lagerwelle 1 um die Schwenkachse eine Verlagerung der Lagerwelle 1 entlang der Führungskulisse 10 aus, wie nachfolgend anhand der Figuren 4a, 4b sowie 5a, 5b noch beschrieben werden wird.

In dem in den Figuren 2, 3a und 3b gezeigten Zustand ist die Lagerwelle 1 jedoch an dem ersten Ende 11 der Führungskulisse 10 arretiert, und zwar unter der Wirkung eines um eine Achse 30 verschwenkbar gelagerten Verriegelungshebel 31, der mittels eines elastischen Elementes 38 derart vorgespannt ist, dass er über ein um eine Achse 200 verschwenkbares Zwischenglied 201 auf den äußeren Umfang der Lagerwelle 1 einwirkt und diese im Bereich des ersten Endes 11 der Führungskulisse 1 fixiert. Hierdurch ist keine kombinierte Dreh- und Verschiebebewegung der Lagerwelle 1 in der Führungskulisse 10 möglich und die Rückenlehne ist in dem in Figur 2 dargestellten, einer Gebrauchsposition der Rückenlehne R entsprechenden Zustand arretiert. Das schwenkbar gelagerte Zwischenglied 201 dient zur Entkopplung der Reibkräfte bei einer Relativbewegung des Verriegelungshebels 3 relativ zu dem ersten Hebel 21 des Gelenkhebelpaares 21, 22.

An seinem zum Arretieren der Lagerwelle 1 vorgesehenen vorderen Ende 33 ist der Verriegelungshebel 31 mittels eines Führungsbolzens 32 und einer zugeordneten kreisbogenförmigen Führungskulisse 35 des Lehnenbeschlages LB definiert geführt.

Zur Entriegelung des Verriegelungshebels 31 bei Betätigung des Entriegelungsmechanismus 6 (vergleiche Figur 2) ist dieser über einen Koppelmechanismus 4, 5 mit dem Entriegelungsmechanismus 6 gekoppelt. Der Koppelmechanismus 4, 5 umfasst als erste Baugruppe 4 eine Zugstange 40, die mit dem Entriegelungsgriff 61 des Entriegelungsmechanismus 6 verbunden ist und die bei einer Betätigung des Entriegelungsgriffes 61 entgegen der Wirkung des Federelementes 62 eine Zugkraft auf einen Auslösehebel 41, 42 überträgt, der auf einem Trägerelement T der Rückenlehne um eine Achse 45 verschwenkbar gelagert ist und der mit einem ersten Hebelarm 41 mit der Zugstange 40 verbunden ist und mit einem zweiten Hebelarm 42 auf ein nachgeordnetes Koppelelement 5 des Koppelmechanismus 4, 5 einwirken kann. Das nachgeordnete Koppelelement 5 des Koppelmechanismus 4, 5 wird gebildet durch einen Koppelhebel, der über eine Buchse 15 auf der die Schwenkachse S der Rückenlehne R bildenden Antriebswelle (relativ zu dieser) schwenkbar gelagert ist und der über eine Führungskulisse 52 mit dem am Verriegelungshebel 31 vorgesehenen Führungsbolzen 32 in Wirkverbindung steht.

Dadurch dass der Koppelhebel 5 über die Buchse 15 drehbar auf der Lagerwelle 1 der Rückenlehne R gelagert ist, können die Lagerwelle 1 und der Koppelhebel 5 relativ zueinander verdreht werden. Bei der Verlagerung der Lagerwelle 1 entlang der Führungskulisse 10 wird der Koppelhebel 5 jedoch stets mitgenommen, so dass er jeweils in einer definierten Position bezüglich des Auslösehebels 41, 42 angeordnet ist.

Im verriegelten Zustand der Rückenlehne R in dem der Entriegelungsmechanismus 6 nicht betätigt ist, steht der Auslösehebel 41, 42 außer Eingriff mit dem nachgeordneten Koppelhebel 5, mit dem er jedoch bei Betätigung des Verriegelungsmechanismus 6 dadurch in Wirkverbindung bringbar ist, dass der zweite Hebelarm 42 des Auslösehebels 4 auf einen von zwei Mitnehmern 51a, 51 b des Koppelhebels 5 einwirkt.

In dem in den Figuren 3a und 3b gezeigten Zustand ist der Auslösehebel 41, 42 jedoch noch außer Eingriff mit dem Koppelelement 5, und zwar wegen der Wirkung der dem Entriegelungshebel 61 zugeordneten Zugfeder 62, die über die Zugstange 40 derart auf den Auslösehebel 41, 42 einwirkt, dass dieser außer Eingriff mit dem nachgeordneten Koppelhebel 5 des Koppelmechanismus 4, 5 steht und dabei gegen einen am Trägerelement T vorgesehenen Anschlag 43 beaufschlagt ist

Die Figuren 4a und 4b zeigen die Anordnung aus den Figuren 3a und 3b nach einer Betätigung des Entriegelungsgriffes 61 des Entriegelungsmechanismus 6 (vergleiche Figur 2), wobei entgegen der Wirkung des Federelementes 62 eine Zugkraft auf die Zugstange 40 ausgeübt wird und diese wiederum eine Schwenkbewegung des Auslösehebels 41, 42 um seine Achse 45 im Uhrzeigersinn auslöst, derart, dass der zweite Hebelarm 42 des Auslösehebels 41, 42 in Eingriff mit einem Mitnehmer 51a des Koppelhebels 5 gerät und den Koppelhebel 5 hierdurch entgegen dem Uhrzeigersinn verschwenkt. Der Koppelhebel 5 nimmt hierbei über seine Führungskulisse 52 den Bolzen 32 des Verriegelungshebels 31 und somit wiederum den Verriegelungshebel 31 der Verriegelungseinrichtung 3 mit, so dass dieser um seine Achse 30 verschwenkt wird, wobei dessen Führungsbolzen 32 in einer zugeordneten, ein Kreisbogensegment beschreibenden Führungskulisse 35 des Lehnenbeschlages LB geführt wird.

Hierdurch befindet sich der Verriegelungshebel 31 außer Eingriff mit der Lagerwelle 1 der Rückenlehne R, so dass nun ein Vorklappen der Rückenlehne R möglich ist, wobei die Lagerwelle eine kombinierte Dreh- und Verschiebebewegung in der Führungskulisse 10 ausführt, und zwar gesteuert durch das Gelenkhebelpaar 21, 22. Die Verschiebebewegung der Lagerwelle 1 beim Vorklappen der Rückenlehne R in der Führungskulisse 10 ist dabei derart, dass die Lagerwelle 1 sich bei einem kompletten Vorklappen der Rückenlehne R aus ihrer Gebrauchsposition heraus auf die Sitzfläche einmal von dem ersten Ende 11 der Führungskulisse zu deren zweitem Ende 12 und wieder zurück zu deren erstem Ende 11 bewegt, wie durch die gestrichelten Pfeile in Figur 4a angedeutet. Durch diese Hin- und Herverlagerung bzw. Hin- und Herbewegung der Lagerwelle 1 der Rückenlehne R in der Führungskulisse 10 beim Vorklappen der Rückenlehne R auf die Sitzfläche F (vergleiche Figur 2) wird die in Figur 1 dargestellte korrigierte Bahnkurve B der Oberkante der Rückenlehne R vom Vorklappen der Rückenlehne erzeugt, die eine Kollision mit einem davor befindlichen Fahrzeugsitz verhindert.

Die Figuren 5a und 5b zeigen die Anordnung aus den Figuren 3a und 3b nach dem Vorklappen der Rückenlehne R auf die Sitzfläche F, wobei die nun wieder im Bereich des ersten, vorderen Endes 11 der Führungskulisse 10 befindliche Lagerwelle 1 erneut mittels des Verriegelungshebels 3 verriegelt ist, nachdem der Entriegelungsgriff 61 losgelassen worden und der Verriegelungshebel 31 unter der Wirkung des Federelementes 38 wieder in eine Position zurückgeschwenkt ist, in der er mit seinem vorderen Ende 33 auf die Lagerwelle 1 der Rückenlehne R über das Zwischenglied 201 einwirkt.

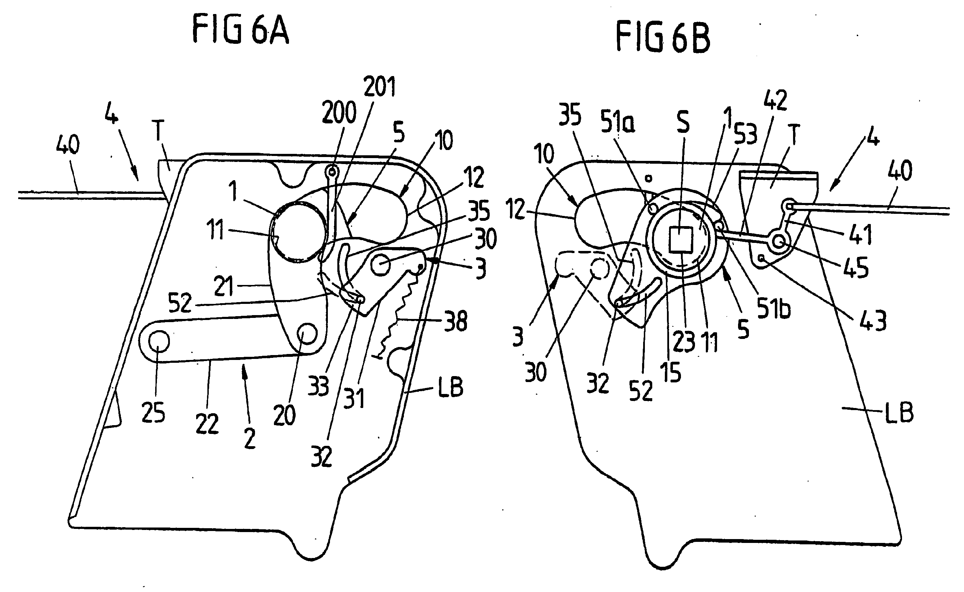

In diesem verriegelten Zustand bei vorgeklappter Rückenlehne R befindet sich der Auslösehebel 41, 42 des Koppelmechanismus 4, 5 wiederum außer Eingriff mit dem nachgeordneten Koppelhebel 5, des Koppelmechanismus 4, 5; er ist jedoch bei einer Betätigung des Entriegelungsmechanismus 6 zur Entriegelung der Rückenlehne R mit dem zweiten Mitnehmer 51 b der beiden Mitnehmer 51 a, 51 b des Koppelhebels 5 in Eingriff bringbar, vergleiche Figuren 6a und 6b.

Das heißt, die beiden voneinander beabstandeten Mitnehmer 51a, 51 b des Koppelhebels 5 ermöglichen es, dass sowohl bei Gebrauchsposition befindlicher Rückenlehne (gemäß den' Figuren 3a bis 4b) als auch bei vorgeklappter Rückenlehne (gemäß den Figuren 5a bis 6b) der Auslösehebel 41, 42 des Koppelmechanismus 4, 5 bei Betätigung des Entriegelungsmechanismus 6 jeweils über einen der beiden Mitnehmer 51 a, 51 b einwirken kann, indem bei Betätigung des Entriegelungsgriffes 61 der zweite Hebelarm 42 des Auslösehebels 41, 42 mit dem jeweils zugeordneten Mitnehmer 51a oder 51 b des Koppelhebels 5 in Eingriff tritt. Der Auslösehebel 41, 42 und der Koppelhebel 5 sind also sowohl bei in Gebrauchsposition befindlicher Rückenlehne R als auch bei auf die Sitzfläche vorgeklappter Rückenlehne R jeweils in dem Sinne miteinander gekoppelt, dass bei Betätigung des Entriegelungsgriffes 61 der Entriegelungsmechanismus 6 über die Zugstange 40 und den Auslösehebel 41, 42 auf den Koppelhebel 5 einwirken kann. In dem dazwischen liegenden Schwenkbereich der Rückenlehne, d. h. in dem Schwenkbereich, in dem die Rückenlehne aus ihrem Gebrauchsbereich heraus weiter nach vorne geklappt worden ist, jedoch noch nicht ihre auf die Sitzfläche vorgeklappte Position erreicht hat, ist der Auslösehebel 41, 42 demgegenüber von dem nachgeordneten Koppelhebel 5 entkoppelt, denn für diese Relativpositionen von Rückenlehne und Sitzuntergestell bzw. Lehnenbeschlag LB sind am Koppelhebel 5 keine Mitnehmer vorgesehen, über die der am lehnenfesten Träger T angeordnete Auslösehebel 41, 42 auf den Koppelhebel 5 einwirken könnte.

In dem zwischen dem Gebrauchsbereich und der vorgeklappten Lehnenposition liegenden Schwenkbereich der Rückenlehne R gleitet der zweite Hebelarm 42 des Auslösehebels 41, 42 über eine Rampe 53 des Koppelhebels 5 von der Umgebung des ersten Mitnehmers 51 a des Koppelhebels 5 in die Umgebung des zweiten Mitnehmers 51 b des Koppelhebels 5. In diesem mittleren Schwenkbereich der Rückenlehne R sind also der Auslösehebel 41, 42 und der Koppelhebel 5 vollständig entkoppelt; es ist keine Einwirkung des Entriegelungsmechanismus 6 auf den Koppelhebel 5 über den Auslösehebel 41, 42 auf den Koppelhebel 5 möglich. Dies ist auch gar nicht erforderlich, da sich die Rückenlehne R in diesem Schwenkbereich nicht mittels des Verriegelungshebels 31 verriegeln lässt. Denn dieser kann auf die Lagerwelle 1 der Rückenlehne R nur dann einwirken, wenn sich diese (entsprechend der aufrechten Gebrauchsposition bzw. der vollständig vorgeklappten Position der Rückenlehne R) am ersten, vorderen Ende 11 der Führungskulisse 10 befindet.

Anhand der Figuren 5a und 5b wird insbesondere deutlich, dass durch das Vorklappen der Rückenlehne R auf die Sitzfläche F des Sitzuntergestells der an einem lehnenfesten Träger T schwenkbar angeordneten Auslösehebel 41, 42 seine Position bezüglich des Lehnenbeschlages LB und damit auch bezüglich des Koppelhebels 5 (entsprechend einer Schwenkbewegung der Rückenlehne um etwa 90°) geändert hat und daher bei einer Betätigung des Entriegelungsgriffes 61 den Entriegelungsmechanismus 6 nun nicht mehr auf den ersten Mitnehmer 51 a sondern auf den um etwa 90° von dem ersten Mitnehmer 51 a beabstandeten zweiten Mitnehmer 51 b des Koppelhebels 5 einwirken kann.

Die Figuren 5a und 5b zeigen die Anordnung aus den Figuren 3a und 3b bei auf die Sitzfläche Vorgeklappter Rückenlehne, wobei die Verriegelungseinrichtung 3 durch Betätigung des Entriegelungsgriffes 61 des Entriegelungsmechanismus 6 entriegelt worden ist, also der Verriegelungshebel 31 sich außer Eingriff mit der Lagerwelle 1 der Rückenlehne R befindet und diese eine kombinierte Schwenk- und Verschiebebewegung in der Kulissenführung 10 ausführen kann, was ein Zurückklappen der Rückenlehne R aus der vorgeklappten Position in die ursprüngliche Gebrauchsposition zulässt, wo dann die Rückenlehne R nach einem Loslassen den Entriegelungsgriffes 61 unter der Wirkung des dem Verriegelungshebel 31 zugeordneten Federelementes 38 in Form einer Zugfeder automatisch wieder verriegelt wird.

## Patentansprüche

1. Sitzanordnung für einen Kraftfahrzeugsitz mit
- einem Sitzuntergestell (U), das eine Sitzfläche (F) für einen Sitzbenutzer definiert,
- einer schwenkbar gelagerten Rückenlehne (R), die um eine Schwenkachse auf die Sitzfläche klappbar ist,
- einer Verriegelungseinrichtung (3) zum Verriegeln der Rückenlehne (R) in mindestens einer Gebrauchsposition, in der sie zum Abstützen des Rückens eines Sitzbenutzers dient, sowie in der vorgeklappten Position,
- einem Entriegelungsmechanismus (6) zum Entriegeln der Verriegelungseinrichtung (3), so dass die Rückenlehne (R) um die Schwenkachse geklappt werden kann, und
- einem Koppelmechanismus (4, 5) zur Kopplung des Entriegelungsmechanismus (6) mit der Verriegelungseinrichtung (3), so dass der Entriegelungsmechanismus (6) über den Koppelmechanismus (4, 5) auf die Verriegelungseinrichtung (3) einwirkt, um ein Vorklappen der Rückenlehne (R) zu ermöglichen,
wobei die Schwenkachse (S) beim Umklappen der Rückenlehne entlang einer vorgegebenen Bahn (10) verlagert wird und wobei mindestens ein Koppelelement (5) des Koppelmechanismus (4, 5) mit der Schwenkachse (S) verbunden ist, so dass es beim Umklappen der Rückenlehne (R) gemeinsam mit der Schwenkachse (S) verlagert wird.

2. Sitzanordnung nach Anspruch 1, **dadurch gekennzeichnet, dass** die Rückenlehne (R) in einem Gebrauchsbereich in mindestens eine Schwenkposition einstellbar ist, die einer Gebrauchsposition der Rückenlehne entspricht, und dass die Rückenlehne (R) aus dem Gebrauchsbereich heraus in Richtung auf die Sitzfläche (F) vorklappbar ist, wobei sie in dem Schwenkbereich zwischen dem Gebrauchsbereich und der vorgeklappten Position nicht verriegelbar ist.

3. Sitzanordnung nach Anspruch 2, **dadurch gekennzeichnet, dass** der Gebrauchsbereich durch genau eine Gebrauchsposition der Rückenlehne (R) definiert ist.

4. Sitzanordnung nach Anspruch 2, **dadurch gekennzeichnet, dass** der Gebrauchsbereich eine Mehrzahl unterschiedlicher Gebrauchspositionen der Rückenlehne (R) umfasst, die jeweils einer unterschiedlichen Neigung der Rückenlehne (R) bezüglich der Sitzfläche (F) des Sitzuntergestells (U) entsprechen.

5. Sitzanordnung nach einem der vorhergehenden Ansprüche, **dadurch gekennzeichnet, dass** das Koppelelement (5) von einer dem Koppelelement (5) vorgelagerten Baugruppe (4) des Koppelmechanismus (4, 5) entkoppelbar ist, so dass das Koppelelement (5) nicht mit dem Entriegelungsmechanismus (6) in Wirkverbindung bringbar ist.

6. Sitzanordnung nach einem der vorhergehenden Ansprüche, **dadurch gekennzeichnet, dass** das Koppelelement (5) nur in bestimmten, vorgebbaren Schwenkpositionen der Rückenlehne (R), die eine begrenzte Auswahl der insgesamt möglichen Schwenkpositionen der Rückenlehne (R) darstellen, mit dem Entriegelungsmechanismus (6) in Wirkverbindung bringbar ist.

7. Sitzanordnung nach Anspruch 6, **dadurch gekennzeichnet, dass** in der mindestens einen Gebrauchsposition der Rückenlehne (R) sowie in der auf die Sitzfläche (F) vorgeklappten Position der Rückenlehne (R) das Koppelelement (5) mit dem Entriegelungsmechanismus (6) in Wirkverbindung bringbar ist.

8. Sitzanordnung nach Anspruch 2 und einem der Ansprüche 5 bis 7, **dadurch gekennzeichnet, dass** das Koppelelement (5) in dem an den Gebrauchsbereich anschließenden Schwenkbereich der Rückenlehne von der vorgelagerten Baugruppe (4) des Koppelmechanismus (4, 5) entkoppelt ist.

9. Sitzanordnung nach einem der Ansprüche 5 bis 8, **dadurch gekennzeichnet, dass** der Entriegelungsmechanismus (6) nicht auf das Koppelelement (5) einwirken kann, wenn dieses von der vorgelagerten Baugruppe (4) des Koppelmechanismus (4, 5) entkoppelt ist.

10. Sitzanordnung nach einem der Ansprüche 5 bis 9, **dadurch gekennzeichnet, dass** der Entriegelungsmechanismus (6) durch Betätigung mit dem Koppelelement (5) in Wirkverbindung bringbar ist, wenn das Koppelelement (5) nicht von der vorgelagerten Baugruppe (4) des Koppelmechanismus (4, 5) entkoppelt ist.

11. Sitzanordnung nach einem der vorhergehenden Ansprüche, **dadurch gekennzeichnet, dass** der Entriegelungsmechanismus (6) zur Entriegelung der Verriegelungseinrichtung (3) betätigbar ist.

12. Sitzanordnung nach Anspruch 11, **dadurch gekennzeichnet, dass** das Koppelelement (5) außer Eingriff mit der vorgelagerten Baugruppe (4) des Koppelmechanismus (4, 5) steht, wenn der Entriegelungsmechanismus (6) nicht zur Entriegelung der Verriegelungseinrichtung (3) betätigt ist.

13. Sitzanordnung nach einem der Ansprüche 5 bis 10 und Anspruch 12, **dadurch gekennzeichnet, dass** das Koppelelement (5) bei Betätigung des Entriegelungsmechanismus (6) mit der vorgelagerten Baugruppe (4) des Koppelmechanismus (4, 5) in Eingriff gerät, wenn das Koppelelement (5) nicht von der vorgelagerten Baugruppe (4) des Koppelmechanismus (4, 5) entkoppelt ist.

14. Sitzanordnung nach Anspruch 13, **dadurch gekennzeichnet, dass** das Koppelelement (5) mindestens einen Mitnehmer (51a, 51b) aufweist, über den die vorgelagerte Baugruppe 4 des Koppelmechanismus (4, 5) mit dem Koppelelement (5) in Eingriff bringbar ist.

15. Sitzanordnung nach Anspruch 14, **dadurch gekennzeichnet, dass** mindestens zwei Mitnehmer (51a, 51b) vorgesehen sind, von denen der eine durch die vorgelagerte Baugruppe (4) des Koppelmechanismus (4, 5) ergreifbar ist, wenn die Rückenlehne (R) sich in einer Gebrauchsposition befindet, und der andere durch die vorgelagerte Baugruppe (4) des Koppelmechanismus (4, 5) ergreifbar ist, wenn die Rückenlehne (R) auf die Sitzfläche (F) vorgeklappt ist.

16. Sitzanordnung nach Anspruch 15, **dadurch gekennzeichnet, dass** die vorgelagerte Baugruppe (4) des Koppelmechanismus (4, 5) an der Rückenlehne (R) angeordnet ist und beim Vorklappen der Rückenlehne (R) gemeinsam mit dieser verschwenkt wird und dass die beiden Mitnehmer (51a, 51 b) derart auf dem Koppelelement (5) angeordnet sind, dass sowohl in der Gebrauchsposition als auch in der vorgeklappten Position der Rückenlehne (R) die vorgelagerte Baugruppe (4) des Koppelmechanismus (4, 5) mit einem der Mitnehmer (51a, 51 b) in Eingriff treten kann.

17. Sitzanordnung nach einem der Ansprüche 5 bis 16, **dadurch gekennzeichnet, dass** die dem Koppelelement (5) vorgelagerte Baugruppe (4) des Koppelmechanismus (4, 5) ein schwenkbar gelagertes Auslöseelement (41, 42) umfasst, über das sie auf das Koppelelement (5) einwirken kann.

18. Sitzanordnung nach Anspruch 17, **dadurch gekennzeichnet, dass** das Auslöseelement (41, 42) über ein Zugmittel (40) mit dem Entriegelungsmechanismus (6) gekoppelt ist.

19. Sitzanordnung nach einem der vorhergehenden Ansprüche, **dadurch gekennzeichnet, dass** der Entriegelungsmechanismus (6) in Richtung auf einen Zustand vorgespannt ist, in dem er nicht zur Entriegelung auf die Verriegelungseinrichtung (3) einwirkt, und dass der Entriegelungsmechanismus (6) entgegen der Wirkung der Vorspannung zur Entriegelung der Verriegelungseinrichtung (3) betätigbar ist.

20. Sitzanordnung nach Anspruch 19, **dadurch gekennzeichnet, dass** der Entriegelungsmechanismus (6) mittels eines elastischen Elementes (62) vorgespannt ist.

21. Sitzanordnung nach einem der vorhergehenden Ansprüche, **dadurch gekennzeichnet, dass** der Entriegelungsmechanismus (6) einen Entriegelungsgriff (61) zur Betätigung des Entriegelungsmechanismus (6) aufweist.

22. Sitzanordnung nach einem der vorhergehenden Ansprüche, **dadurch gekennzeichnet, dass** das Koppelelement (5) schwenkbar auf der Schwenkachse (S) gelagert ist.

23. Sitzanordnung nach einem der Ansprüche 13 bis 15 und Anspruch 22, **dadurch gekennzeichnet, dass** das Koppelelement (5) bei Betätigung des Entrieglungsmechanismus (6) verschwenkbar ist, um die Verriegelungseinrichtung (3) zu entriegeln.

24. Sitzanordnung nach einem der vorhergehenden Ansprüche, **dadurch gekennzeichnet, dass** die Schwenkachse (1) in einer Führungskulisse (10) geführt ist, um sie beim Umklappen der Rückenlehne (R) zu verlagern.

25. Sitzanordnung nach einem der vorhergehenden Ansprüche, **dadurch gekennzeichnet, dass** die Schwenkachse (S) beim Vorklappen der Rückenlehne (R) mittels einer Hebelanordnung (21, 22), insbesondere in Form eines Gelenkhebelpaares, verlagerbar ist.

26. Sitzanordnung nach Anspruch 25, **dadurch gekennzeichnet, dass** die Schwenkachse (S) über die Hebelanordnung (21, 22) mit dem Sitzuntergestell (U) verbunden ist.

27. Sitzanordnung nach einem der vorhergehenden Ansprüche, **dadurch gekennzeichnet, dass** die Schwenkachse (S) beim Vorklappen der Rückenlehne (R) hin und her verlagert wird, so dass sie sich nach dem Vorklappen der Rückenlehne (R) auf die Sitzfläche (F) in der gleichen Position befindet wie vor dem Vorklappen der Rückenlehne (R).

28. Sitzanordnung nach einem der vorgehenden Ansprüche, **dadurch gekennzeichnet, dass** das Koppelelement (5) mit der Verriegelungseinrichtung (3) in Wirkverbindung steht.

29. Sitzanordnung nach Anspruch 28, **dadurch gekennzeichnet, dass** das Koppelelement (5) gelenkig mit einem Element (31) der Verriegelungseinrichtung (3) verbunden ist.

30. Sitzanordnung nach Anspruch 29, **dadurch gekennzeichnet, dass** das Koppelelement (5) und das Element (31) der Verriegelungseinrichtung (3) über eine Längsführung (32, 52) gelenkverbunden sind.

31. Sitzanordnung nach einem der vorhergehenden Ansprüche, **dadurch gekennzeichnet, dass** die Verriegelungseinrichtung (3) in Richtung auf den verriegelten Zustand vorgespannt und mittels des Entriegelungsmechanismus (6) entgegen der Vorspannung entriegelbar ist.

32. Sitzanordnung nach einem der vorhergehenden Ansprüche, **dadurch gekennzeichnet, dass** die Verriegelungseinrichtung (3) einen schwenkbar gelagerten Verriegelungshebel (31) aufweist, der im verriegelten Zustand die Schwenkachse (S) blockiert, so dass sie nicht verlagert werden kann.

33. Sitzanordnung nach Anspruch 32, **dadurch gekennzeichnet, dass** der Verriegelungshebel (31) unter der Wirkung des Entriegelungsmechanismus (6) derart verschwenkbar ist, dass die Schwenkachse (S) freigegeben wird.

34. Sitzanordnung nach Anspruch 32 oder 33, **dadurch gekennzeichnet, dass** der Verriegelungshebel (31) beim Verschwenken mittels eines Führungsbolzens (32) und einer Führungskulisse (35, 52) geführt wird.

## Claims

1. Seat arrangement for a motor vehicle seat with
- a seat underframe (U) which defines a seat surface (F) for a seat user
- a pivotally mounted backrest (R) which is able to fold round a pivotal axis onto the seat surface
- a locking device (3) for locking the backrest (R) in at least one useful position in which it serves to support the back of the seat user, as well as in the forward-folded position
- an unlocking mechanism (6) to unlock the locking device (3) so that the backrest (R) can be folded round the pivotal axis, and
- a coupling mechanism (4, 5) for coupling the unlocking mechanism (6) to the locking device (3) so that the unlocking mechanism (6) acts through the coupling mechanism (4, 5) on to the locking device (3) in order to allow the backrest (R) to fold forwards,
wherein the pivotal axis (S) is moved along a predetermined path (10) as the backrest is folded round and wherein at least one coupling element (5) of the coupling mechanism (4, 5) is connected to the pivotal axis (S) so that it is shifted together with the pivotal axis (S) as the backrest (R) is folded round.

2. Seat arrangement according to claim 1, **characterised in that** the backrest (R) can be adjusted in a useful area into at least one pivotal position which corresponds to a useful area of the backrest, and that the backrest (R) can be folded forwards from the useful area towards the seat surface (F) wherein it cannot be locked in the pivotal area between the useful area and the forward-folded position.

3. Seat arrangement according to claim 2, **characterised in that** the useful area is defined through just one useful position of the backrest (R).

4. Seat arrangement according to claim 2, **characterised in that** the useful area comprises a number of different useful positions of the backrest (R) which each correspond to a different incline of the backrest (R) relative to the seat surface (F) of the seat underframe (U).

5. Seat arrangement according to one of the preceding claims, **characterised in that** the coupling element (5) can be uncoupled from a structural assembly (4) of the coupling mechanism (4, 5) mounted in front of the coupling element (5) so that the coupling element (5) cannot be brought into active connection with the unlocking mechanism (6).

6. Seat arrangement according to one of the preceding claims, **characterised in that** the coupling element (5) can only be brought into active connection with the unlocking mechanism (6) in specific predeterminable pivotal positions of the backrest (R) which represent a limited choice of the overall possible pivotal positions of the backrest (R).

7. Seat arrangement according to claim 6, **characterised in that** in the at least one useful position of the backrest (R) as well as in the position of the backrest (R) folded forwards onto the seat surface (F) the coupling element (5) can be brought into active connection with the unlocking mechanism (6).

8. Seat arrangement according to claim 2 and one of claims 5 to 7, **characterised in that** the coupling element (5) is uncoupled from the structural assembly (4) of the coupling mechanism (4, 5) mounted in front of same in the pivotal area of the backrest adjoining the useful area.

9. Seat arrangement according to one of claims 5 to 8, **characterised in that** the unlocking mechanism (6) cannot act on the coupling element (5) if the latter is uncoupled from the structural assembly (4) of the coupling mechanism (4, 5) mounted in front of same.

10. Seat arrangement according to one of claims 5 to 9, **characterised in that** the unlocking mechanism (6) can be brought into active connection with the coupling element (5) through actuation if the coupling element (5) is not uncoupled from the structural assembly (4) of the coupling mechanism (4, 5) mounted in front of same.

11. Seat arrangement according to one of the preceding claims, **characterised in that** the unlocking mechanism (6) can be actuated to unlock the locking device (3).

12. Seat arrangement according to claim 11, **characterised in that** the coupling element (5) stands out of engagement with the structural assembly (4) of the coupling mechanism (4, 5) mounted in front of same if the unlocking mechanism (6) is not actuated to unlock the locking device (3).

13. Seat arrangement according to one of claims 5 to 10 and claim 12, **characterised in that** during actuation of the unlocking mechanism (6) the coupling element (5) enters into engagement with the structural assembly (4) of the coupling mechanism (4, 5) mounted in front of same, if the coupling element (5) is not uncoupled from the structural assembly (4) of the coupling mechanism (4, 5) mounted in front of same.

14. Seat arrangement according to claim 13, **characterised in that** the coupling element (5) has at least one entrainment member (51 a, 51 b) through which the structural assembly (4) of the coupling mechanism (4, 5) mounted in front of same can be brought into engagement with the coupling element (5).

15. Seat arrangement according to claim 14, **characterised in that** at least two entrainment members (51, 51 b) are provided of which the one can be engaged through the structural assembly (4) of the coupling mechanism (4, 5) mounted in front of same when the backrest (R) is located in a useful position, and the other can be engaged by the structural assembly (4) of the coupling mechanism (4, 5) mounted in front of same when the backrest (R) is folded forwards onto the seat surface (F).

16. Seat arrangement according to claim 15, **characterised in that** the structural assembly (4) of the coupling mechanism (4, 5) mounted in front of same is mounted on the backrest (R) and when the backrest (R) is folded forwards is pivoted together with same and that the two entrainment members (51a, 51b) are mounted on the coupling element (5) so that both in the useful position and in the forward folded position of the backrest (R) the structural assembly (4) of the coupling mechanism (4, 5) mounted in front of same can enter into engagement with one of the entrainment members (51a, 51b).

17. Seat arrangement according to one of claims 5 to 16, **characterised in that** the structural assembly (4) of the coupling mechanism (4, 5) mounted in front of the coupling element (5) comprises a pivotally mounted release element (41, 42) through which it can act on the coupling element (5).

18. Seat arrangement according to claim 17, **characterised in that** the release element (41, 42) is coupled to the unlocking mechanism (6) through a traction member (40).

19. Seat arrangement according to one of the preceding claims, **characterised in that** the unlocking mechanism (6) is pretensioned towards a position in which it does not act to unlock the locking device (3), and that the unlocking mechanism (6) can be actuated against the action of the pretension to unlock the locking device (3).

20. Seat arrangement according to claim 19, **characterised in that** the unlocking mechanism (6) is pretensioned by means of an elastic element (62).

21. Seat arrangement according to one of the preceding claims, **characterised in that** the unlocking mechanism (6) has an unlocking handle (61) to actuate the unlocking mechanism (6).

22. Seat arrangement according to one of the preceding claims, **characterised in that** the coupling element (5) is mounted pivotally on the pivotal axis (S).

23. Seat arrangement according to one of the claims 13 to 15 and claim 22, **characterised in that** the coupling element (5) can pivot during actuation of the unlocking mechanism (6) in order to unlock the locking device (3).

24. Seat arrangement according to one of the preceding claims, **characterised in that** the pivotal axis (1) is guided in a guiding slide (10) in order to shift as the backrest (R) is folded round.

25. Seat arrangement according to one of the preceding claims, **characterised in that** the pivotal axis (S) can be shifted as the backrest (R) folds forwards by means of a lever arrangement (21, 22), more particularly in the form of a pair of articulation levers.

26. Seat arrangement according to claim 25, **characterised in that** the pivotal axis (S) is connected to the seat underframe (U) through the lever arrangement (21, 22).

27. Seat arrangement according to one of the preceding claims, **characterised in that** the pivotal axis (S) is shifted to and fro as the backrest (R) is folded forwards so that after the backrest (R) has folded forwards onto the seat surface (F) the axis is located in the same position as it was before the backrest (R) was folded forwards.

28. Seat arrangement according to one of the preceding claims, **characterised in that** the coupling element (5) is in active connection with the locking device (3).

29. Seat arrangement according to claim 28, **characterised in that** the coupling element (5) is connected for articulated movement to an element (31) of the locking device (3).

30. Seat arrangement according to claim 29, **characterised in that** the coupling element (5) and the element (31) of the locking device (3) are connected together for articulation through a longitudinal guide (32, 52).

31. Seat arrangement according to one of the preceding claims, **characterised in that** the locking device (3) is pretensioned towards the locked state and can be unlocked against the pretension by means of the unlocking mechanism (6).

32. Seat arrangement according to one of the preceding claims, **characterised in that** the locking device (3) has a pivotally mounted locking lever (31) which in the locked state blocks the pivotal axis (S) so that it cannot be shifted.

33. Seat arrangement according to claim 32, **characterised in that** the locking lever (31) can pivot under the action of the unlocking mechanism (6) so that the pivotal axis (S) is released.

34. Seat arrangement according to claim 32 or 33, **characterised in that** the locking lever (31) during pivotal movement is guided by means of a guide bolt (32) and a guiding slide (35, 52).

## Revendications

1. Ensemble formant siège pour un siège de véhicule automobile, comportant
- un châssis de siège (U) qui définit une surface d'assise (F) pour un utilisateur du siège,
- un dossier (R) monté avec faculté de pivotement, rabattable sur la surface d'assise autour d'un axe de pivotement,
- un dispositif de verrouillage (3) pour verrouiller le dossier (R) dans au moins une position d'utilisation dans laquelle il sert à soutenir le dos d'un utilisateur du siège, ainsi que dans la position rabattue vers l'avant,
- un mécanisme de déverrouillage (6) pour déverrouiller le dispositif de verrouillage (3), de sorte que le dossier (R) peut être rabattu autour de l'axe de pivotement, et
- un mécanisme d'accouplement (4, 5) pour accoupler le mécanisme de déverrouillage (6) au dispositif de verrouillage (3), de sorte que le mécanisme de déverrouillage (6) agit sur le dispositif de verrouillage (3) via le mécanisme d'accouplement (4, 5), afin de permettre un rabattement du dossier (R) vers l'avant,
dans lequel l'axe de pivotement (S) est déplacé le long d'une trajectoire prédéterminée (10) pendant le rabattement du dossier et au moins un élément d'accouplement (5) du mécanisme d'accouplement (4, 5) est relié à l'axe de pivotement (S), de manière à être déplacé conjointement avec l'axe de pivotement (S) lors du rabattement du dossier (R).

2. Ensemble formant siège selon la revendication 1, **caractérisé en ce que** dans une zone d'utilisation, le dossier (R) est réglable dans au moins une position de pivotement qui correspond à une position d'utilisation du dossier, et **en ce que** le dossier (R) est rabattable vers l'avant hors de la zone d'utilisation dans la direction de la surface d'assise (F), mais n'est pas verrouillable dans la zone de pivotement entre la zone d'utilisation et la position rabattue.

3. Ensemble formant siège selon la revendication 2, **caractérisé en ce que** la zone d'utilisation est définie par précisément une position d'utilisation du dossier (R).

4. Ensemble formant siège selon la revendication 2, **caractérisé en ce que** la zone d'utilisation comprend une pluralité de différentes positions d'utilisation du dossier (R) qui correspondent chacune à une inclinaison différente du dossier (R) par rapport à la surface d'assise (F) du châssis de siège (U).

5. Ensemble formant siège selon l'une des revendications précédentes, **caractérisé en ce que** l'élément d'accouplement (5) est susceptible d'être désaccouplé vis-à-vis d'un sous-ensemble (4) du mécanisme d'accouplement (4, 5) agencé en avant de l'élément d'accouplement (5), de sorte que l'élément d'accouplement (5) ne peut pas être amené en liaison d'action avec le mécanisme de déverrouillage (6).

6. Ensemble formant siège selon l'une des revendications précédentes, **caractérisé en ce que** l'élément d'accouplement (5) ne peut être amené en liaison d'action avec le mécanisme de déverrouillage (6) que dans certaines positions de pivotement prédéterminées du dossier (R) qui représentent au total un choix limité des positions de pivotement possibles du dossier (R).

7. Ensemble formant siège selon la revendication 6, **caractérisé en ce que** dans ladite au moins une position d'utilisation du dossier (R), ainsi que dans la position du dossier (R) rabattu sur la surface d'assise (F), l'élément d'accouplement (5) peut être amené en liaison d'action avec le mécanisme de déverrouillage (6).

8. Ensemble formant siège selon la revendication 2 et l'une des revendications 5 à 7, **caractérisé en ce que** l'élément d'accouplement (5) est désaccouplé du sous-ensemble avant (4) du mécanisme d'accouplement (4, 5) dans la zone de pivotement du dossier qui suit la zone d'utilisation.

9. Ensemble formant siège selon l'une des revendications 5 à 8, **caractérisé en ce que** le mécanisme de déverrouillage (6) ne peut pas agir sur l'élément d'accouplement (5) lorsque celui-ci est désaccouplé du sous-ensemble avant (4) du mécanisme d'accouplement (4, 5).

10. Ensemble formant siège selon l'une des revendications 5 à 9, **caractérisé en ce que** le mécanisme de déverrouillage (6) peut être amené par actionnement en liaison d'action avec l'élément d'accouplement (5), lorsque l'élément d'accouplement (5) n'est pas désaccouplé du sous-ensemble avant (4) du mécanisme d'accouplement (4, 5).

11. Ensemble formant siège selon l'une des revendications précédentes, **caractérisé en ce que** le mécanisme de déverrouillage (6) peut être actionné pour déverrouiller le dispositif de verrouillage (3).

12. Ensemble formant siège selon la revendication 11, **caractérisé en ce que** l'élément d'accouplement (5) est dégagé du sous-ensemble avant (4) du mécanisme d'accouplement (4, 5) lorsque le mécanisme de déverrouillage (6) n'est pas actionné pour déverrouiller le dispositif de verrouillage (3).

13. Ensemble formant siège selon l'une des revendications 5 à 10 et selon la revendication 12, **caractérisé en ce que** lors d'un actionnement du mécanisme de déverrouillage (6), l'élément d'accouplement (5) vient en engagement avec le sous-ensemble avant (4) du mécanisme d'accouplement (4, 5), lorsque l'élément d'accouplement (5) n'est pas désaccouplé du sous-ensemble avant (4) du mécanisme d'accouplement (4, 5).

14. Ensemble formant siège selon la revendication 13, **caractérisé en ce que** l'élément d'accouplement (5) comprend au moins un entraîneur (51a, 51b) par lequel le sous-ensemble avant (4) du mécanisme d'accouplement (4, 5) peut être amené en engagement avec l'élément d'accouplement (5).

15. Ensemble formant siège selon la revendication 14, **caractérisé en ce qu'**il est prévu au moins deux entraîneurs (51a, 51b) dont l'un est saisissable par le sous-ensemble avant (4) du mécanisme d'accouplement (4, 5), lorsque le dossier (R) se trouve dans une position d'utilisation, et l'autre est saisissable par le sous-ensemble avant (4) du mécanisme d'accouplement (4, 5) lorsque le dossier (R) est rabattu sur la surface d'assise (F).

16. Ensemble formant siège selon la revendication 15, **caractérisé en ce que** le sous-ensemble avant (4) du mécanisme d'accouplement (4, 5) est agencé sur le dossier (R) et, lors du rabattement du dossier (R) vers l'avant, il est pivoté conjointement avec celui-ci, et **en ce que** les deux entraîneurs (51a, 51b) sont agencés sur l'élément d'accouplement (5) de telle sorte qu'aussi bien dans la position d'utilisation que dans la position rabattue du dossier (R) vers l'avant, le sous-ensemble avant (4) du mécanisme d'accouplement (4, 5) peut venir en engagement avec l'un des entraîneurs (51a, 51b).

17. Ensemble formant siège selon l'une des revendications 5 à 16, **caractérisé en ce que** le sous-ensemble (4) du mécanisme d'accouplement (4, 5) agencé en avant de l'élément d'accouplement (5) comprend un élément de déclenchement (41, 42) monté avec faculté de pivotement, par lequel il est capable d'agir sur l'élément d'accouplement (5).

18. Ensemble formant siège selon la revendication 17, **caractérisé en ce que** l'élément de déclenchement (41, 42) est accouplé au mécanisme de déverrouillage (6) via un moyen de traction (40).

19. Ensemble formant siège selon l'une des revendications précédentes, **caractérisé en ce que** le mécanisme de déverrouillage (6) est précontraint dans le sens d'un état dans lequel il n'agit pas sur le dispositif de verrouillage (3) en vue d'un déverrouillage, et **en ce que** le mécanisme de déverrouillage (6) peut être actionné en sens opposé à l'action de la précontrainte pour le déverrouillage du dispositif de verrouillage (3).

20. Ensemble formant siège selon la revendication 19, **caractérisé en ce que** le mécanisme de déverrouillage (6) est précontraint au moyen d'un élément élastique (62).

21. Ensemble formant siège selon l'une des revendications précédentes, **caractérisé en ce que** le mécanisme de déverrouillage (6) comprend une manette de déverrouillage (61) pour actionner le mécanisme de déverrouillage (6).

22. Ensemble formant siège selon l'une des revendications précédentes, **caractérisé en ce que** l'élément d'accouplement (5) est monté avec faculté de pivotement sur l'axe de pivotement (S).

23. Ensemble formant siège selon l'une des revendications 13 à 15 et selon la revendication 22, **caractérisé en ce que** l'élément d'accouplement (5) est susceptible de pivoter lors d'un actionnement du mécanisme de déverrouillage (6), afin de déverrouiller le dispositif de verrouillage (3).

24. Ensemble formant siège selon l'une des revendications précédentes, **caractérisé en ce que** l'axe de pivotement (S) est guidé dans une coulisse de guidage (10) pour le déplacer lors du rabattement du dossier (R).

25. Ensemble formant siège selon l'une des revendications précédentes, **caractérisé en ce que** lors du rabattement du dossier (R), l'axe de pivotement (S) est déplaçable au moyen d'un agencement à levier (21, 22), en particulier sous la forme d'une paire de leviers articulés.

26. Ensemble formant siège selon la revendication 25, **caractérisé en ce que** l'axe de pivotement (S) est relié au châssis de siège (U) via l'agencement à levier (21, 22).

27. Ensemble formant siège selon l'une des revendications précédentes, **caractérisé en ce que** lors du rabattement du dossier (R), l'axe de pivotement (S) est déplacé en va-et-vient de telle sorte qu'après le rabattement du dossier (R) sur la surface d'assise (F), il se trouve dans la même position qu'avant le rabattement du dossier (R).

28. Ensemble formant siège selon l'une des revendications précédentes, **caractérisé en ce que** l'élément d'accouplement (5) est en liaison d'action avec le dispositif de verrouillage (3).

29. Ensemble formant siège selon la revendication 28, **caractérisé en ce que** l'élément d'accouplement (5) est relié en articulation à un élément (31) du dispositif de verrouillage (3).

30. Ensemble formant siège selon la revendication 29, **caractérisé en ce que** l'élément d'accouplement (5) et l'élément (31) du dispositif de verrouillage (3) sont reliés en articulation via un guidage longitudinal (32, 52).

31. Ensemble formant siège selon l'une des revendications précédentes, **caractérisé en ce que** le dispositif de verrouillage (3) est précontraint dans le sens de l'état verrouillé et est déverrouillable au moyen du mécanisme de déverrouillage (6) à l'encontre de la précontrainte.

32. Ensemble formant siège selon l'une des revendications précédentes, **caractérisé en ce que** le dispositif de verrouillage (3) comprend un levier de verrouillage (31) monté avec faculté de pivotement qui bloque l'axe de pivotement (S) dans l'état verrouillé, de sorte que celui-ci ne peut pas être déplacé.

33. Ensemble formant siège selon la revendication 32, **caractérisé en ce que** le levier de verrouillage (31) peut pivoter sous l'action du mécanisme de déverrouillage (6) de telle sorte que l'axe de pivotement (S) est libéré.

34. Ensemble formant siège selon la revendication 32 ou 33, **caractérisé en ce que** lors du pivotement le levier de verrouillage (31) est guidé au moyen d'un goujon de guidage (32) et d'une coulisse de guidage (35, 52).
